# EUROPÄISCHE PATENTSCHRIFT

(11) **EP 0 645 410 B1**
(45) Veröffentlichungstag und Bekanntmachung des Hinweises auf die Patenterteilung: **28.01.1998**
(21) Anmeldenummer: 94114302.6
(22) Anmeldetag: 12.09.1994
(51) Int. Cl.: C08G 18/28, C08G 18/80, C08G 18/76

(54) **Wasserlösliche bzw.-dispergierbare Polyisocyanat-Zubereitung**
Water-soluble or water-dispersible polyisocyanate composition
Composition de polyisocyanate soluble ou dispersible dans l'eau

(30) Priorität: 23.09.1993 DE 4332322
(43) Veröffentlichungstag der Anmeldung: 29.03.1995
(73) Patentinhaber: BAYER AG, 51368 Leverkusen (DE)
(72) Erfinder: Schmalstieg, Lutz, Dr., D-50676 Köln (DE); Kremer, Wolfgang, Dipl.-Ing., D-47647 Kerken (DE); Brahm, Martin, Dr., D-51766 Engelskirchen (DE); Probst, Joachim, Dr., D-51375 Leverkusen (DE); Kubitza, Werner, Dipl.-Ing., D-51377 Leverkusen (DE)

(56) Entgegenhaltungen:
- EP-A- 0 486 881
- FR-A- 2 334 699

## Beschreibung

Die Erfindung betrifft eine nichtionisch-hydrophil modifizierte, Urethangruppen aufweisende Polyisocyanate-Zubereitung auf Basis von 2,4- und/oder 2,6-Diisocyanatotoluol, ein Verfahren zu ihrer Herstellung, ein, eine derartige Polyisocyanat-Zubereitung enthaltendes Zweikomponenten-Polyurethan-Beschichtungsmittel und dessen Verwendung zur Herstellung von Beschichtungen auf flächigen wasserresistenten Substraten.

In der Oberflächentechnologie spielt die ökologische Verträglichkeit der Lacke und Beschichtungsstoffe eine immer bedeutendere Rolle. Das vordringliche Problem ist dabei die Reduzierung der in Lacken und Beschichtungsstoffen verwendeten Mengen organischer Lösungsmittel. Einen wichtigen Beitrag zur Lösung dieses Problems liefern die in neuerer Zeit bekannt gewordenen wäßrigen Dispersionslacke, u.a., die in neuerer Zeit bekannt gewordenen wäßrigen Zweikomponenten-Polyurethanlacke, die ebenso wie die entsprechenden altbekannten, aus Lösung zu verarbeitenden Zweikomponenten-Polyurethanlacke die Herstellung von hochwertigen Lacküberzügen gestatten. Derartige Zweikomponenten-Polyurethan-Beschichtungsmittel werden beispielsweise in EP-A-0 358 979, EP-A-0 543 228, EP-A-0 542 105 oder in den unter den Veröffentlichungsnummern 9305087 bzw. 9309157 veröffentlichten PCT-Anmeldungen beschrieben. Von besonderer Bedeutung sind hierbei die Systeme der EP-A-0 358 979 auf Basis von ausgewählten, in Wasser löslichen bzw. dispergierbaren Polyacrylatharzen und vorzugsweise niedermolekularen aliphatischen Lackpolyisocyanaten. Die Lacke dieser Vorveröffentlichungen trocknen relativ langsam, so daß sie für Anwendungsgebiete, bei denen es auf eine schnelle Trocknung entscheidend ankommt, wie z.B. der Holz- und Möbellackierung, nur bedingt geeignet sind. Dies gilt auch für die Zweikomponenten-Systeme der unter der Offenlegungsnummer 191770/1984 veröffentlichten Japanischen Patentanmeldung 58-66736. Die in dieser Vorveröffentlichung beschriebenen Beschichtungsmittel zeigen nach eigenen Versuchen völlig unzureichende filmbildende Eigenschaften - es werden stets matte Filme mit starken Oberflächenstörungen erhalten, wobei zudem, wie aus den Ausführungsbeispielen ersichtlich, selbst bei Verwendung von aromatischen Polyisocyanaten Trocknungszeiten von 3 Tagen erforderlich sind.

Aus diesen Ausführungen ergibt sich die der Erfindung zugrundliegende Aufgabe, die darin bestand, neue, wäßrige Zweikomponenten-Polyurethan-Beschichtungsmittel zur Verfügung zu stellen, die einerseits einer akzeptable Verarbeitungszeit aufweisen, andererseits aber bei Raumtemperatur genauso schnell aushärten wie die bekannten, lösungsmittelhaltigen Zweikomponenten-Polyurethanlacke des Standes der Technik.

Wie jetzt überraschend gefunden wurde, gelingt die Lösung dieser Aufgabe bei Verwendung der nachstehend näher beschriebenen, erfindungsgemäßen Polyisocyanat-Zubereitungen als Polyisocyanat-Komponente in wäßrigen Zweikomponenten-Polyurethanlacken der beispielhaft genannten Art.

Gegenstand der Erfindung ist eine durch teilweise Urethanisierung der Isocyanatgruppen von 2,4- und/oder 2,6-Diisocyanatotoluol durch Reaktion mit ein- und mehrwertigen Alkoholen erhaltene, wasserdispergierbare oder -lösliche Polyisocyanat-Zubereitung, gekennzeichnet durch
a) eine mittlere NCO-Funktionalität von 1,9 bis 3,3,
b) einen Gehalt an Isocyanatgruppen (berechnet als NCO, Molekulargewicht 42) von 8 bis 18 Gew.-%,
c) einem Gehalt an Ethylenoxideinheiten (berechnet als C₂H₄O, Molekulargewicht 44) von 5 bis 40 Gew.-%, die innerhalb von endständigen, zumindest zu 70 Mol-% aus Ethylenoxideinheiten bestehenden Polyetherketten angeordnet sind, wobei die Polyetherketten im statistischen Mittel 7 bis 25 Alkylenoxideinheiten aufweisen, und
d) einen Urethangruppen-Gehalt (berechnet als CHNO₂, Molekulargewicht 59) von 13 bis 33 Gew.-%.

Gegenstand der Erfindung ist auch ein Verfahren zur Herstellung dieser Polyisocyanat-Zubereitung, welches dadurch gekennzeichnet ist, daß man
A) eine Polyisocyanatkomponente einer (mittleren) NCO-Funktionalität von 2,7 bis 4,1, einem Gehalt an Isocyanatgruppen von 12 bis 20 Gew.-% und einem Gehalt an Urethangruppen von 17 bis 29 Gew.-%, bestehend aus mindestens einem, durch teilweise Urethanisierung der Isocyanatgruppen von 2,4 und/oder 2,6-Diisocyanatotoluol hergestellten, Urethangruppen-aufweisenden Polyisocyanat, mit
B) einer einwertigen, hydrophilen Polyetherkomponente, bestehend aus mindestens einem einwertigen Polyetheralkohol mit (im statistischen Mittel) 7 bis 25 Alkylenoxideinheiten, die zumindest zu 70 Mol-% aus Ethylenoxideinheiten bestehen,
unter Einhaltung eines NCO/OH-Äquivalentverhältnisses von 4:1 bis 120:1 unter Urethanbildung umsetzt, wobei im übrigen Art und Mengenverhältnisse der Ausgangskomponenten so gewählt werden, daß die resultierenden Umsetzungsprodukte den unter a) bis d) gemachten Bedingungen entsprechen.

Gegenstand der Erfindung ist schließlich auch ein wäßriges Zweikomponenten-Polyurethan-Beschichtungsmittel, dessen Bindemittel im wesentlichen aus einer Kombination aus
I) einer Polyisocyanat-Zubereitung der genannten Art und
II) einer in Wasser löslichen oder dispergierbaren Polyhydroxylkomponente
in einem NCO/OH-Äquivalentverhältnis von 0,6:1 bis 2:1 entsprechenden Mengen besteht, sowie dessen Verwendung zur Herstellung von Beschichtungen auf flächigen, wasserresistenten Substraten.

In einer Reihe von Vorveröffentlichungen, beispielsweise in EP-A-0 061 628, EP-A-0 013 112, DE-OS 2 908 844, DE-OS 2 921 681 oder US-PS 3 996 154, wird bereits die Herstellung von wasserdispergierbaren Polyisocyanaten durch Umsetzung von aromatischen Polyisocyanaten mit hydrophilen, Ethylenoxideinheitenaufweisenden, einwertigen Polyetheralkoholen beschrieben, wobei oftmals innerhalb langer Listen geeignete Ausgangsmaterialien auch Urethangruppen aufweisende Polyisocyanate auf Basis von Diisocyanatotoluol erwähnt werden. In keiner der genannten Vorveröffentlichungen findet sich jedoch ein konkreter Hinweis auf die erfindungsgemäße Polyisocyanat-Zubereitung, geschweige denn auf deren Eignung zur Herstellung schnell trocknender Zweikomponenten-Polyurethanlacke.

Zur Herstellung der erfindungsgemäßen Polyisocyanat-Zubereitungen werden als Ausgangsmaterialien
A1) 2,4- und/oder 2,6-Diisocyanatotoluol, d.h. insbesondere 2,4-Diisocyanatotoluol oder seine technischen Gemische mit bis zu 35 Gew.-%, bezogen auf Gemisch, an 2,6-Diisocyanatotoluol,
A2) mehrwertige Alkohole des Molekulargewichtsbereichs 62 bis 500, vorzugsweise 106 bis 300 und
B) einwertige, Ethylenoxideinheiten aufweisende, hydrophile Polyetheralkohole
eingesetzt.

Bei den mehrwertigen Alkoholen A2) handelt es sich beispielsweise um Ethylenglykol, Propylenglykol, die isomeren Butandiole, Pentandiole, Hexandiole, Octandiole, Glycerin, Trimethylolethan, Trimethylolpropan und/oder Pentaerythrit oder um beliebige Gemische derartiger mehrwertiger Alkohole. Vorzugsweise besteht die Komponente A2) jedoch zumindest teilweise aus Ethergruppen aufweisenden, mehrwertigen Alkoholen mit einem bis zu 500, vorzugsweise bis zu 300 liegenden, aus Hydroxylgruppengehalt und Hydroxylfunktionalität errechenbaren Molekulargewicht. Derartige Ethergruppen aufweisende mehrwertige Alkohole sind beispielsweise die Di- und Polyethylenglykole bzw. Di- oder Polypropylenglykole des genannten Molekulargewichtsbereichs oder die Alkoxylierungsprodukte der beispielhaft genannten höher als difunktionellen Alkohole, wobei bei der Alkoxylierung Ethylenoxid und/oder Propylenoxid in beliebiger Reihenfolge zur Anwendung gelangen können. Vorzugsweise werden Ethergruppen aufweisende mehrwertige Alkohole in solchen Mengen mitverwendet, daß die resultierenden erfindungsgemäßen Polyisocyanat-Zubereitungen neben den bereits oben genannten Struktureinheiten a) bis d) bis zu 16 Gew.-%, vorzugsweise 2 bis 12 Gew-% an a), von solchen mehrwertigen Etheralkoholen herrührenden Ethersauerstoffatomen vorliegen.

Bei der Komponente A2) handelt sich es sich vorzugsweise um Gemische der beispielhaft genannten mehrwertigen Alkohole. Die (mittlere) Hydroxylfunktionalität der Komponente A2) liegt bei mindestens 2,5, vorzugsweise bei 2,5 bis 3.

Bei der Komponente B) handelt es sich um einwertige Polyetheralkohole oder ein Gemisch einwertiger Polyetheralkohole mit 7 bis 25, vorzugsweise 10 bis 20 Alkylenoxideinehiten, die zumindest zu 70 Mol-%, vorzugsweise zumindest zu 80 Mol-% und besonders bevorzugt ausschließlich aus Ethylenoxideinheiten bestehen. Neben Ethylenoxideinheiten können in den einwertigen Polyetheralkoholen insbesondere noch Propylenoxideinheiten vorliegen. Die Herstellung dieser einwertigen Polyetheralkohole geschieht in an sich bekannter Weise durch Alkoxylierung von einwertigen Alkoholen mit vorzugsweise bis zu 6 Kohlenstoffatomen. Bevorzugte Startermoleküle sind C₁-C₄-Alkanole wie beispielsweise n-Butanol, n-Propanol, Isopropanol, Ethanol und, besonders bevorzugt, Methanol. Unter "endständigen Polyetherketten" sind im Rahmen der Erfindung solche Polyetherketten zu verstehen, die durch die Verwendung der Komponente B) in die erfindungsgemäßen Polyisocyanat-Zubereitungen eingebaut worden sind.

Die erfindungsgemäßen Polyisocyanat-Zubereitungen werden vorzugsweise nach einem zweistufigen Synthesekonzept hergestellt: Zunächst wird nach an sich bekannten Verfahren (vgl. z.B. DE-PS 1 090 196 bzw. US-PS 3 183 112) aus der Diisocyanatkomponente A1) und der mehrwertigen Alkoholkomponente A2) die beim erfindungsgemäßen Verfahren einzusetzende, Urethangruppen aufweisende Polyisocyanatkomponente A) hergestellt. Hierzu werden z.B. die Ausgangskomponenten A1) und A2) unter Einhaltung eines NCO/OH-Äquivalentverhältnisses von 4:1 bis 20:1, vorzugsweise 5:1 bis 10:1, bei 40 bis 140°C, vorzugsweise 50 bis 110°C unter Urethanbildung umgesetzt, worauf sich eine destillative Entfernung des überschüssigen Ausgangsdiisocyanats A1), vorzugsweise im Dünnschichtverdampfer bis zu einem Restgehalt von maximal 0,5 Gew.-% anschließt.

Im übrigen werden bei der Herstellung der Komponente A) Art und Mengenverhältnisse der Komponenten A1) und A2) vorzugsweise so gewählt, daß die Urethangruppen aufweisende Polyisocyanat-Komponente A) einen Urethangruppen-Gehalt (berechnet als CHNO₂, Molekulargewicht 59) von 17 bis 29 Gew.-%, eine (mittlere) NCO-Funktionalität von 2,7 bis 4,1, einen NCO-Gehalt von 12 bis 20 Gew.-% und einen Gehalt an über mehrwertige Ethanalkohole A2) eingebauten Ethersauerstoffatomen von 0 bis 16, vorzugsweise 2 bis 12 Gew.-%, aufweist.

Die im allgemeinen in harzartiger Form anfallenden, Urethangruppen aufweisenden Polyisocyanate A) werden vorzugsweise zur weiteren Verarbeitung in geeigneten organischen Lösungsmitteln gelöst. Geeignete Lösungsmittel sind z.B. die bekannten üblichen Lacklösemittel wie z.B. Ethylacetat, Butylacetat, Ethylenglykolmonomethyl- oder -ethyletheracetat, 1-Methoxypropyl-2-acetat, 2-Butanon, Cyclohexanon, Toluol, Xylol oder deren Gemische. Prinzipiell geeignet sind aber auch Lösungsmittel wie Propylenglykoldiacetat, Diethylenglykoldimethylether, Di-ethylenglykolethyl- und butyletheracetat, N-Methylpyrrolidon und N-Methylcaprolactam oder Gemische solcher und gegebenenfalls der erstgenannten Lösungsmittel.

Die Menge der Lösungsmittel in den resultierenden Lösungen der Urethangruppen aufweisenden Polyisocyanate A) liegt vorzugsweise bei maximal 40, vorzugsweise maximal 30 und besonders bevorzugt maximal 25 Gew.-%, bezogen auf das Gesamtgewicht der Lösung.

Im zweiten Syntheseschritt werden die gelösten Polyisocyanate A) mit der Polyetherkomponente B) unter Einhaltung eines NCO/OH-Äquivalentverhältnisses von 4:1 bis 120:1, vorzugsweise 6:1 bis 100:1 bei 20 bis 100, vorzugsweise 40 bis 80°C unter Urethanbildung zur Reaktion gebracht.

Prinzipiell ist es auch möglich, die erfindungsgemäßen Polyisocyanat-Zubereitungen in einem Syntheseschritt herzustellen. Diese Verfahrensweise ist jedoch weniger bevorzugt. Hierzu werden die vorstehend naher beschriebenen Polyalkohole A1) und die vorstehend beschriebenen monofunktionellen Polyetheralkohole B) in Mischung mit überschüssigem Toluylendiisocyanat A1) bei Temperaturen von 40 bis 140°C, vorzugsweise 50 bis 110°C, umgesetzt. Die Mengen der Reaktionspartner entsprechen dabei im allgemeinen einem NCO/OH-Verhältnis von 4:1 bis 20:1, vorzugsweise 5:1 bis 20:1.

Nach der Prepolymerisierung wird der Überschuß an nicht umgesetztem Toluylendiisocyanat durch Vakuumdünnschichtdestillation bis zu einem Restgehalt von maximal 0,5 Gew.-% entfernt. Die dabei anfallenden Polyisocyanatgemische werden anschließend in den vorstehend beispielhaften beschriebenen Lösemitteln gelöst. Der Anteil an organischen Lösemitteln sollte in diesem Fall 30 Gew.-%, vorzugsweise 25 Gew.-%, ganz besonders bevorzugt 20 Gew.-%, bezogen auf das Gesamtgewicht der Lösung, nicht überschreiten.

Bei allen Varianten der Herstellung der erfindungsgemäßen Polyisocyanat-Zubereitungen werden Art und Mengenverhältnisse der Ausgangskomponenten im Rahmen der gemachten Offenbarung so gewählt, daß die erfindungsgemäßen Polyisocyanat-Zubereitungen
a) eine mittlere, aus NCO-Gehalt und dampfdruckosmometrisch bestimmten Molekulargewicht Mₙ berechneten NCO-Funktionalität von 1,9 bis 3,3, vorzugsweise 2,6 bis 3,0,
b) ein Gehalt an Isocyanatgruppen (berechnet als NCO, Molekulargewicht 42) von 8 bis 18 Gew.-%,
c) ein Gehalt an Inhalt von endständigen Polyetherketten angeordneten Alkylenoxideinheiten, die zumindest zu 70, vorzugsweise zumindest zu 80 und besonders bevorzugt zu 100 Mol-% aus Ethylenoxideinheiten bestehen, von 5 bis 40, vorzugsweise 10 bis 30 und besonders bevorzugt 14 bis 27 Gew.-%,
d) einen Gehalt an Urethangruppen (berechnet als CHNO₂, Molekulargewicht 59) von 13 bis 33, vorzugsweise 16 bis 25 Gew.-% und
e) einen Gehalt an, von eingebauten mehrwertigen Etheralkoholen herrührenden, Ethersauerstoffatomen von bis zu 16 %, vorzugsweise 2 bis 12 Gew.-%,
aufweisen.

Alle Angaben bezüglich der Zusammensetzung der erfindungsgemäßen Polyisocyanat-Zubereitungen beziehen sich auf den Lösungsmittel-freien Feststoff.

Die erfindungsgemäßen Polyisocyanat-Zubereitungen werden vorzugsweise in Form von Lösungen der oben beispielhaft genannten Art in Lösungsmitteln der oben beispielhaft genannten Art der erfindungsgemäßen Verwendung zugeführt. Die Lösungen lassen sich leicht, ohne Einsatz hoher Scherkräfte in Wasser emulgieren. Dabei entstehen stabile Emulsionen, in denen die NCO/Wasser-Reaktion überraschend langsam abläuft. Die Emulsionen weisen überraschenderweise selbst nach einer Standzeit von 24 h bei Raumtemperatur keinerlei Ausfällungen oder Bodensatz auf.

Die erfindungsgemäßen Zweikomponenten-Polyurethan-Beschichtungsmittel enthalten die erfindungsgemäßen Polyisocyanat-Zubereitungen als Vernetzer, d.h. als eine wesentliche Bindemittelkomponente. Die zweite Bindemittelkomponente in den erfindungsgemäßen Beschichtungsmitteln weist eine (mittlere) Hydroxylfunktionalität von mindestens 2 auf und besteht aus mindestens einer in Wasser löslichen oder dispergierbaren Hydroxylverbindung, vorzugsweise Polyhydroxylverbindung des Molekulargewichtsbereichs Mn 500 bis 50.000 und des Hydroxylzahlbereichs 15 bis 300. Bei dem genannten Molekulargewicht handelt es sich um das gelpermeationschromatographisch unter Verwendung von Polystyrol als Standard ermittelbare Zahlenmittel.

Als zweite Bindemittelkomponente beispielhaft genannt seien in Wasser lösliche oder dispergierbare, Hydroxylgruppen aufweisende Polyurethane, Polyetherpolyol oder Polyacrylatharze. Auch Hydroxylgruppen aufweisende Urethan- und Estergruppen aufweisende Polyole des genannten Molekulargewichts- und Hydroxylzahlbereichs sind geeignet.

Die Verwendung von in Wasser gelösten oder dispergierten, Hydroxylgruppen aufweisenden Vinylpolymerisaten ist bevorzugt. Diese Vinylpolymerpolyole enthalten Sulfonat- und/oder Carboxylatgruppen, vorzugsweise Carboxylatgruppen und gegebenenfalls Sulfonsäure- und/oder Carboxylgruppen, vorzugsweise Carboxylgruppen, und weisen ein mittleres Molekulargewicht Mn (Zahlenmittel) von 50 bis 50.000, eine Hydroxylzahl von 16,5 bis 264 mg KOH/g und eine Säurezahl, bezogen auf alle Carboxyl- und/oder Sulfonsäuregruppen, die dabei zu 10 bis 100 % in der Salzform vorliegen, von 4 bis 156 mg KOH/g Festharz auf.

Die Herstellung der Hydroxylgruppen aufweisenden Polymerisate erfolgt durch an sich bekannte Methoden der radikalischen Polymerisation, z.B. der Lösungsmittelpolymerisation, der Emulsionspolymerisation und der Suspensionspolymerisation. Bevorzugt sind die Verfahren der Lösungs- und der Emulsionspolymerisation.

In den erfindungsgemäßen Zweikomponenten-Polyurethan-Beschichtungsmitteln liegen die Bindemittelkomponenten I), d.h. die erfindungsgemäßen Polyisocyanat-Zubereitungen und die Bindemittelkomponente II), d.h. die Hydroxylgruppen aufweisenden Verbindungen in solchen Mengen vor, die einem NCO/OH-Äquivalentverhältnis, bezogen auf die alkoholischen Hydroxylgruppen der Komponente II) von 0,6:1 bis 2:1, vorzugsweise 0,8:1 bis 1,5:1 entsprechen.

Der Wassergehalt der in Form von wäßrigen Lösungen oder insbesondere Dispersionen vorliegenden Beschichtungsmitteln liegt im allgemeinen bei 35 bis 80, vorzugsweise 40 bis 70 Gew.-%. Der Gehalt an Lösungsmitteln der oben beispielhaft genannten Art liegt im allgemeinen bei 4 bis 10 Gew.-%.

Die erfindungsgemäßen Beschichtungsmittel können selbstverständlich neben den genannten Bindemitteln, Wasser und Lösungsmitteln noch weitere an sich bekannte Hilfs- und Zusatzmittel enthalten. Hierzu gehören beispielsweise nichtfunktionelle wäßrige Lackbindemittel zur Erzielung spezieller Eigenschaften, beispielsweise als Additive zur Haftverbesserung; Verlaufshilfsmittel, Farbpigmente, Füllstoffe, Mattierungsmittel, Verdickungsmittel, Entschäumer oder auch externe Emulgatoren der an sich bekannten Art.

Die erfindungsgemäßen Beschichtungsmittel zeigen eine überraschend schnelle Trocknung bereits bei Raumtemperatur, so daß sie sich insbesondere für einen Einsatz in der Holz- und Möbelindustrie empfehlen. Infolge der bei industrieller Anwendung erforderlichen kurzen Taktzeiten, ist bei diesem Einsatzzweck eine möglichst schnelle Schleifbarkeit erwünscht.

Völlig unerwartet ist der Befund, daß mit Hilfe der erfindungsgemäßen Polyisocyanatgemische Zweikomponenten-Lacke formuliert werden können, die sogar noch schneller trocknen als lösemittelhaltige Zweikomponenten-PUR-Lacke, des Standes der Technik. Dies wird nachstehend durch einen Vergleichsversuch belegt.

Selbstverständlich ist es jedoch auch möglich, die erfindungsgemäßen wäßrigen Zweikomponenten-Polyurethanlacke bei erhöhter Temperatur bzw. durch Einbrennen bei Temperaturen bis 200°C zu trocknen.

Die erfindungsgemäßen Beschichtungsmittel eignen sich insbesondere zur Beschichtung beliebiger, wasserresistenter flächiger Substrate. In diesem Zusammenhang beispielhaft genannt seien Flächengebilde aus Holz, Spanplatten, Metall, Glas, Stein, keramische Materialien, Beton, Kunststoffen, Textilien, Leder oder Papier, die vor der Beschichtung gegebenenfalls auch mit üblichen Grundierungen versehen werden können.

Die mit dem erfindungsgemäßen Beschichtungsmitteln hergestellten Überzüge zeichnen sich nicht nur durch ihre schnelle Trocknung bei Umgebungstemperatur sondern auch durch ihre hervorragenden optischen Eigenschaften, wie Oberflächenglanz, Verlauf und Transparenz aus.

Die folgenden Beispiele dienen zur weiteren Erläuterung der Erfindung. Alle Prozentangaben beziehen sich, soweit nicht anderslautend vermerkt, auf Gewichtsprozente.

### Beispiel 1

### Herstellung einer erfindungsgemäßen Polyisocyanat-Zubereitung

### 1.1 Herstellung eines Urethangruppen aufweisenden Polyisocyanats A:

Zu 3.654 g eines Gemisches aus 80 % 2,4-Diisocyanatotoluol und 20 % 2,6-Diisocyanatotoluol werden bei 60°C 440 g eines durch Propoxylierung von Trimethylolpropan hergestellten Polyethers des mittleren Molekulargewichts 440 langsam zugetropft. Nach beendetem Zutropfen wird 2 Stunden bei 60°C nachgerührt. Anschließend wird das Produkt durch Vakuum-Dünnschichtdestillation bei 140°C/0,1 mm vom monomeren Diisocyanat befreit.

Man erhält ein Urethangruppen aufweisendes Polyisocyanat A in Form eines fast farblosen Harzes, das 80%ig in Butylacetat gelöst wird. Die Lösung des Polyisocyanates besitzt folgende Kenndaten:

| | |
|---|---|
| Festkörpergehalt | 80 % |
| Viskosität | 4800 mPas/23°C |
| NCO-Gehalt* | 13,1 % |
| Molekulargewicht* | 1150 g/mol (nach Dampfdurckosmometrie) |
| ber. NCO-Funktionalität* | 3,59 |
| Monomergehalt* | 0,03 Gew.-% |

| | |
|---|---|
| * Angaben beziehen sich auf Feststoff | |

### 1.2 Erfindungsgemäßes Verfahren

Zu 400 g des gelösten Polyisocyanats A werden bei 40°C 16,5 g Butylacetat und 66 g eines auf Methanol gestarteten, monofunktionellen Polyethylenoxidpolyethers mit einem mittleren Molekulargewicht von 550 nacheinander zugetropft. Man rührt bei 40°C bis ein konstanter NCO-Gehalt von 7,5 % erreicht ist.

Die so erhaltene Lösung der erfindungsgemäßen Polyisocyanat-Zubereitung weist folgende Kenndaten auf:

| | |
|---|---|
| Festkörpergehalt | 80 % |
| NCO-Gehalt* | 9,4 % |
| Viskosität | 3900 mPas/23°C |
| Monomergehalt* | <0,03 % |
| Molekulargewicht* | 1232 g/mol (nach Dampfdurckosmometrie) |
| ber. NCO-Funktionalität* | 2,57 |
| Urethangruppengehalt* | 17 % |
| innerhalb endständiger Polyetherketten eingebaute Ethylenoxideinheiten* | 16,1 % |
| Ethersauerstoffatome e) (in der Kette)* | 8,2 % |

| | |
|---|---|
| * Angaben beziehen sich auf Feststoff | |

### Beispiel 2

### Herstellung einer erfindungsgemäßen Polyisocyanat-Zubereitung

### 2.1 Herstellung eines Urethangruppen aufweisenden Polyisocyanats A

Zu 3.864 g einer Mischung aus 65 % 2,4-Diisocyanatotoluol und 35 % 2,6-Diisocyanatotoluol wird bei 80°C eine Mischung aus 252 g Trimethylolpropan und 120 g Diethylenglykol langsam zugetropft. Nach 2-stündigem Nachrühren bei 80°C wird wie in Beispiel 1 aufgearbeitet. Das erhaltene blaßgelbe Harz weist als 67%ige Lösung in Butylacetat folgende Kenndaten auf:

| | |
|---|---|
| Festkörpergehalt | 67 % |
| Viskosität | 1400 mPas/23°C |
| NCO-Gehalt* | 17,3 % |
| Molekulargewicht* | 787 g/mol (dampfdurckosmometrisch bestimmt) |
| ber. NCO-Funktionalität* | 3,25 |
| Monomergehalt* | 0,23 Gew.-% |

| | |
|---|---|
| * Angaben beziehen sich auf Feststoff | |

### 2.2 Erfindungsgemäßes Verfahren

Zu 362 g des gelösten Polyisocyanats A werden bei 50°C 80 g eines auf Methanol gestarteten monofunktionellen Polyethylenoxidpolyethers mit dem mittleren Molekulargewicht 550 zugetropft. Man rührt bei 50°C bis ein konstanter NCO-Gehalt von 8,2 % erreicht ist.

Die so erhaltene Lösung der erfindungsgemäßen Polyisocyanat-Zubereitung weist folgende Kenndaten auf:

| | |
|---|---|
| Festkörpergehalt | 73 % |
| NCO-Gehalt* | 11,2 % |
| Viskosität | 3200 mPas/23°C |
| Monomergehalt* | 0,1 % |
| Molekulargewicht* | 874 g/mol |
| ber. NCO-Funktionalität* | 2,34 |
| Urethangruppengehalt* | 25 % |
| innerhalb endständiger Polyetherketten eingebaute Ethylenoxideinheiten* | 23,5 % |
| Ethersauerstoffatome e) (in der Kette)* | 2,0 % |

| | |
|---|---|
| * Angaben beziehen sich auf Feststoff | |

### Beispiel 3

### Einstufige Herstellung einer erfindungsgemäßen Polyisocyanat-Zubereitung

Zu 372,4 g eines Gemisches aus 80 % 2,4-Diisocyanatotoluol und 20 % 2,6-Diisocyanatotoluol werden bei 50°C 157 g eines durch Propoxylierung von Trimethylolpropan hergestellten Polyethers des mittleren Molekulargewichts 440 langsam zugetropft. Im Anschluß werden bei gleicher Temperatur 71 g eines auf Methanol gestarteten, monofunktionellen Polyethylenoxidpolyethers mit einem mittleren Molekulargewicht von 550 zugetropft und weitergerührt, bis ein NCO-Gehalt von ca. 21 % erreicht ist.

Zur Befreiung von monomerem Diisocyanat wird das Produkt bei 150°C 0,1 mm einer Vakuum-Dünnschichtdestillation unterworfen.

Man erhält ein fast farbloses Harz, das 80%ig in Butylacetat gelöst, folgende Kenndaten aufweist:

| | |
|---|---|
| Festkörpergehalt | 80 % |
| Viskosität | 900 mPas/23°C |
| NCO-Gehalt* | 11,1 % |
| Monomerengehalt* | 0,03 % |
| Molekulargewicht* | 1150 g/mol (dampfdurckosmometrisch bestimmt) |
| ber. NCO-Funktionalität* | 3,05 |
| Urethangruppengehalt* | 16,2 % |
| innerhalb endständiger Polyetherketten eingebaute Ethylenoxideinheiten* | 15,4 % |
| Ethersauerstoffatome e) (in der Kette)* | 7 % |

| | |
|---|---|
| * Angaben beziehen sich auf Feststoff | |

### Beispiel 4

### Herstellung einer wäßrigen Dispersion eines als Bindemittelkomponente II) geeigneten Polyacrylatharzes

In einem 127 Liter Autoklav werden 10.000 g Essigsäure-n-butylester vorgelegt. Anschließend wird mit Stickstoff gespült und der Autoklav verschlossen. Dann wird unter Rühren auf 110°C erwärmt. Daraufhin wird eine Monomermischung bestehend aus 17.488 g Methacrylsäure-2-hydroxyethylester, 9.944 g Methacrylsäuremethylester, 22.860 g Acrylsäure-n-butylester und 4.572 g Acrylsäure sowie eine Lösung von 1.905 g Azoisobutyronitril in 29.718 g Essigsäure-n-butylester gleichzeitig und gleichmäßig in 4 Stunden zudosiert. Nach Beendigung des Zulaufs wird mit einer Lösung von 381 g t-Butyl-per-2-ethylhexanoat in 762 g Essigsäure-n-butylester nachaktiviert. Es wird 4 Stunden nachgerührt und danach die Polymerisatlösung mit einer Mischung von 2.591 g 25%iger wäßriger Ammoniaklösung und 112 g entionisiertem Wasser vereinigt. Danach wird unter Anlegen eines Vakuums von 200 bis 400 mbar und bei einer Temperatur von 50 bis 70°C Essigsäure-n-butylester zusammen mit Wassser und Restmonomeren abdestilliert. Danach wird soviel Wasser zugegeben, daß eine 30%ige, sehr feinteilige Dispersion resultiert.

Kenndaten:

| | |
|---|---|
| Festkörpergehalt | 30 % |
| Viskosität | ca. 10.000 mPas/23°C |
| OH-Gehalt (des Festkörpers) | 4,0 % |

### Beispiel 5

### Herstellung eines erfindungsgemäßen wäßrigen Zweikomponenten-Polyurethan-Lacks

76,7 Gew.-Teile der in Beispiel 4 beschriebenen wäßrigen Dispersion, 0,83 Gew.-Teile eines handelsüblichen Verdickers (Acrysol RM8 der Fa. Rohm u. Haas) und 0,5 Gew.-Teile eines handelsüblichen Entschäumers (BYK 023, Fa. BYK-Chemie, Wesel) werden unter Zugabe von 16,3 Gew.-Teilen Wasser sorgfältig vermischt. Die dabei erhaltene Stammkomponente für einen wasserverdünnbaren Zweikomponenten-Lack hat eine praktisch unbegrenzte Lagerstabilität. Nach Zugabe von 23,8 Gew.-Teilen der Lösung einer erfindungsgemäßen Polyisocyanat-Zubereitung aus Beispiel 3 und 20 Gew.-Teilen Wasser zur Einstellung auf Verarbeitungskonsistenz erhält man einen verarbeitungsfähigen wasserverdünnbaren Zweikomponenten-Polyurethan-Lack.

Die Verarbeitungszeit des gemischten Materials beträgt ca. 3 Stunden bei Raumtemperatur. Bei Auftrag des verarbeitungsfähigen Gemisches auf eine Glasplatte in einer Naßfilmschichtdicke von 200 µm erhält man nach Trocknung eine transparenten, glänzenden Film in einer Trockenfilmschichtdicke von 40 µm. Der Film ist nach 90 Minuten Trocknung bei Raumtemperatur handtrocken, nach 2 Stunden ist der Film schleifbar.

### Beispiel 6

### Herstellung eines erfindungsgemäßen wäßrigen Zweikomponenten-Polyurethan-Lacks

Die Stammkomponente wird wie in Beispiel 5 beschrieben hergestellt. Nach Zugabe von 30,5 Gew.-Teilen der Lösung einer erfindungsgemäßen Polyisocyanat-Zubereitung aus Beispiel 1, 5,86 Gew.-Teilen Zinkstearat-Lösung (20%ig in Wasser) und 31 Gew.-Teilen destilliertem Wasser erhält man einen verarbeitungsfähigen, wasserverdünnbaren Zweikomponenten-Polyurethanlack. Die Verarbeitungszeit des gemischten Materials beträgt 90 Minuten bei Raumtemperatur. Ein in einer Naßfilm-Schichtdicke von 200 µm auf eine Glasplatte aufgebrachter Film trocknet zu einem transparenten, glänzenden Lackfilm in einer Trockenfilmschichtdicke von 40 µm. Bereits nach 2 Stunden Trocknung bei Raumtemperatur erreicht der Film eine Pendelhärte (gemäß DIN 53157) von 95 sec. Bereits nach 25-minütiger Trocknung bei Raumtemperatur ist der Film schleifbar.

### Beispiel 7

### Herstellung eines erfindungsgemäßen wäßrigen Zweikomponenten-Polyurethan-Lacks

Die Stammkomponente wird wie in Beispiel 4 beschrieben hergestellt. Nach Zugabe von 25,9 Gew.-Teilen der Lösung einer erfindungsgemäßen Polyisocyanat-Zubereitung aus Beispiel 2, 5,86 Gew.-Teilen Zinkstearat-Lösung (20%ig in Wasser) und 26 Gew.-Teilen Wasser erhält man einen verarbeitungsfähigen, wasserverdünnbaren Zweikomponenten-Polyurethanlack. Ein in einer Naßfilm-Schichtdicke von 200 µm auf eine Glasplatte aufgebrachter Film trocknet zu einem transparenten, glänzenden Film in einer Trockenfilmschichtdicke von 35 µm. Nach 2 Stunden Trocknung bei Raumtemperatur erreicht der Film bereits eine Pendelhärte (gemäß DIN 53157) von 65 sec. Nach 25-minütiger Trocknung bei Raumtemperatur ist der Film schleifbar.

### Beispiel 8

### Nicht erfindungsgemäßes Vergleichsbeispiel Herstellung eines lösemittelhaltigen Zweikomponenten-Polyurethan-Lacks

66,7 Gew.-Teile eines handelsüblichen Polyacrylatharzes mit einem Hydroxylgruppengehalt von 1,0 % (®Desmophen A 450, Handelsprodukt der Bayer AG), 47,73 Gew.-Teilen Essigsäure-n-butylester, 1,13 Gew.-Teilen Zinkstearat und 12,7 Gew.-Teile eines handelsüblichen Urethangruppen-aufweisenden Polyisocyanats auf Basis Toluylendiisocyanat (®Desmodur L 75, Handelsprodukt der Bayer AG, 75%ige Lösung in Ethylacetat, NCO-Gehalt 13,0 %) werden innig vermischt.

Ein in einer Naßfilm-Schichtdicke von 200 µm auf eine Glasplatte aufgebrachter Film trocknet zu einem transparenten hochglänzenden Film. Nach 6 Stunden Trocknung bei Raumtemperatur erreicht der Film eine Pendelhärte (gemäß DIN 53157) von 20 sec. Nach 24 Stunden steigt die Pendelhärte auf 124 sec. Schleifbarkeit ist erst nach einer Trocknungszeit von 6 Stunden bei Raumtemperatur gegeben.

### Beispiel 9

### Nicht erfindungsgemäßes Vergleichsbeispiel Herstellung eines lösemittelhaltigen Zweikomponenten-Polyurethan-Lacks

60 Gew.-Teile eines handelsüblichen Polyesterpolyols (®Desmophen 1300, Handelsprodukt der Bayer AG, 75%ige Lösung in Xylol) mit einem Hydroxylgruppengehalt von 3 % und 36,5 Gew.-Teilen des Polyisocyanats aus Beispiel 8 werden unter Zusatz von 1,9 Gew.-Teilen Zinkstearat und 30 Gew.-Teilen Essigsäure-n-butylester innig vermischt. Ein in einer Naßfilm-Schichdicke von 200 µm auf eine Glasplatte aufgerakelter Film trocknet zu einem transparenten, glänzenden Lackfilm. Nach 6 Stunden Trocknung bei Raumtemperatur erreicht der Film eine Pendelhärte (gemäß DIN 53157) von 25 sec. Schleifbarkeit ist erst nach einer Trocknungszeit von 6 Stunden bei Raumtemperatur gegeben.

### Beispiel 10

### Herstellung einer wäßrigen Dispersion eines als Bindemittelkomponente II) geeigneten Polyacrylatharzes

In einem 3 Liter Rührautoklaven mit Stickstoffeinlaß und -auslaß werden 400 g Methoxypropylacetat vorgelegt. Es wird kräftig mit Stickstoff gespült und danach unter Rühren auf 145°C erwärmt. Innerhalb von 4 Stunden wird eine Mischung aus 508 g Methacrylsäurehydroxypropylester (durch Anlagerung von ein Mol Propylenoxid an ein Mol Methacrylsäure erhaltenes Isomerengemisch), 160 g Acrylsäure, 1000 g Methacrylsäuremethylester und 252 g Acrylsäure-n-butylester und die Initatorlösung, bestehend auf 67 g Di-butylperoxid in 100 g Methoxypropylacetat gleichzeitig und gleichmäßig zudosiert. Anschließend wird auf eine Innentemperatur von 140°C abgekühlt und mit 13 g Di-butylperoxid nachaktiviert. Danach wird das organisch gelöste Polymerisat mit einer wäßrigen Neutralisationslösung von 90,7 g 25%iger Ammoniaklösung in 3.000 ml Wasser in einem 6 Liter Rührkolben vereinigt. Die wäßrig/organische Dispersion wird homogen gerührt, danach wird bei einem Druck von 100 bis 300 mbar destilliert, wobei das Lösungsmittel Methoxypropylacetat und Restmonomeren entfernt werden.

Man erhält eine nahezu transparente Dispersion mit folgenden Kenndaten:

| | |
|---|---|
| Festkörpergehalt | 53,2 Gew.-% |
| Viskosität | 3000 mPas/23°C |
| OH-Gehalt (des Festkörpers) | 3,0 % |

### Beispiel 11

### Herstellung eines erfindungsgemäßen wäßrigen Zweikomponenten-Polyurethan-Lacks

100 Gew.-Teile der wäßrigen Dispersion eines hydroxyfunktionellen Polyacrylatharzes aus Beispiel 10 werden mit 0,7 Gew.-Teilen der 25%igen wäßrigen Lösung eines handelsüblichen Emulgators (Emulgator WN der Fa. Bayer AG) und 2,6 Gew.-Teilen einer 20%igen Lösungen eines handelsüblichen Polyurethanverdickers (®Acrysol RM8 der Fa. Rohm und Haas) in Wasser sorgfältig gemischt. Die dabei erhaltene Stammkomponente für einen wasserverdünnbaren Zweikomponenten-Polyurethan-Lack hat praktisch unbegrenzte Lagerstabilität.

Nach Zugabe von 70,0 Gew.-Teilen der Lösung einer erfindungsgemäßen Diisocyanat-Zubereitung aus Beispiel 1 sowie 40 Gew.-Teilen Wasser erhält man einen verarbeitungsfähigen wäßrigen Zweikomponenten-Polyurethan-Lack. Die Verarbeitungszeit des gemischten Materials beträgt ca. 5 Stunden bei Raumtemperatur. Nach Auftrag des verarbeitungsfähigen Gemisches auf eine Unterlage in einer Naßfilm-Schichtdicke von 200 µm, entsprechend einer Trockenfilmschichtdicke von 50 bis 60 µm, erhält man einen transparenten, glänzenden Film.

Der Film ist nach 30 Minuten staubtrocken und nach 180 Minuten durchgetrocknet. Die Pendelhärte (gemäß DIN 53157) beträgt 170 sec. Die Lackfilme zeigen gute Haftung auf Parketthölzern, Metallen, mineralischen Substraten wie Beton, Putz, Faserzement sowie auf diversen Kunststoffen.

### Beispiel 12

### Herstellung eines erfindungsgemäßen, pigmentierten wäßrigen Zweikomponenten-Polyurethan-Lacks

7,56 Gew.-Teile Wasser werden mit 0,64 Gew.-Teilen eines handelsüblichen Dispergieradditivs (BYK 154 der Fa. BYK, Wesel) und 0,22 Gew.-Teilen eines handelsüblichen Entschäumers (®Bevaloid 581 der Fa. Erbslöh, Düsseldorf) homogen verrührt. Unter leichtem Rühren werden nun portionsweise 25,07 Gew.-Teilen eines handelsüblichen Titandioxid-Rutil-Typs (®Bayertitan R-KB-4 der Fa. Bayer AG) zugegeben. Nun wird die Dispergiergeschwindigkeit mit einer Dispergierscheibe auf ca. 10 bis 15 Umdrehungen/sec erhöht und 30 Minuten belassen. Der so gefertigte Slurry wird gesiebt und abgekühlt.

Sodann wird mit 42,02 Gew.-Teilen der Dispersion des hydroxyfunktionellen Acrylatharzes aus Beispiel 10, 1,19 Gew.-Teilen einer 10%igen wäßrigen Lösung eines handelsüblichen Biozids zur Verhinderung von Pilzbefall (®Preventol D6 der Fa. Bayer AG) sowie 1,19 Gew.-Teilen einer 5%igen wäßrien Lösung eines handelsüblichen Polyuethan-Verdickers (Acrysol RM8 der Fa. Rohm und Haas) gemischt. Man erhält so die Stammkomponente eines wäßrigen, pigmentierten Zweikomponenten-Polyurethan-Lacks mit praktisch unbegrenzter Lagerstabilität.

Fügt man zu 77,89 Gew.-Teilen der Stammkomponente 22,11 Gew.-Teile der Lösung der erfindungsgemäßen Polyisocyanat-Zubereitung aus Beispiel 1, so erhält man nach sorgfältigem Verrühren einen verarbeitungsfähigen Zweikomponentenlack. Die Verarbeitungszeit der Mischung beträgt 4 Stunden bei Raumtemperatur. Ein in einer Naßfilm-Schichtdicke von 200 µm, entsprechend einer Trockenfilmschichtdicke von 50 bis 60 µm, auf eine Unterlage aufgebrachter Film ist nach 20 Minuten staubtrocken und nach 120 Minuten durchgetrocknet. Der ausgehärtete Film weist eine Pendelhärte (gemäß DIN 53157) von 130 sec. auf. Der Film zeigt eine gute Beständigkeit gegen die üblichen Lösungsmittel. Sehr gute Haftfestigkeit ist auf Holz und mineralischen Untergründen gegeben.

## Patentansprüche

1. Durch teilweise Urethanisierung der Isocyanatgruppen von 2,4- und/oder 2,6-Diisocyanatotoluol durch Reaktion mit ein- und mehrwertigen Alkoholen erhaltene, wasserdispergierbare Polyisocyanat-Zubereitung, gekennzeichnet durch
a) eine mittlere NCO-Funktionalität von 1,9 bis 3,3,
b) einen Gehalt an Isocyanatgruppen (berechnet als NCO, Molekulargewicht 42) von 8 bis 18 Gew.-%,
c) einem Gehalt an Ethylenoxideinheiten (berechnet als C₂H₄O, Molekulargewicht 44) von 5 bis 40 Gew.-%, die innerhalb von endständigen, zumindest zu 70 Mol-% aus Ethylenoxideinheiten bestehenden Polyetherketten angeordnet sind, wobei die Polyetherketten im statistischen Mittel 7 bis 25 Alkylenoxideinheiten aufweisen, und
d) einen Urethangruppen-Gehalt (berechnet als CHNO₂, Molekulargewicht 59) von 13 bis 33 Gew.-%.

2. Wasserdispergierbare Polyisocyanat-Zubereitung gemäß Anspruch 1, gekennzeichnet durch
e) über Urethangruppen eingebaute, mehrwertige Etheralkohole, in einer solchen Menge, die einem Gehalt der Polyisocyanat-Zubereitung an innerhalb solcher Polyetheralkohole angeordneten Ethersauerstoffatomen von bis zu 16 Gew.-% entspricht.

3. Verfahren zur Herstellung einer Polyisocyanat-Zubereitung gemäß Anspruch 1, dadurch gekennzeichnet, daß man
A) eine Polyisocyanatkomponente einer (mittleren) NCO-Funktionalität von 2,7 bis 4,1, einem Gehalt an Isocyanatgruppen von 12 bis 20 Gew.-% und einem Gehalt an Urethangruppen von 17 bis 29 Gew.-%, bestehend aus mindestens einem, durch teilweise Urethanisierung der Isocyanatgruppen von 2,4 und/oder 2,6-Diisocyanatotoluol hergestellten, Urethangruppen-aufweisenden Polyisocyanat, mit
B) einer einwertigen, hydrophilen Polyetherkomponente, bestehend aus mindestens einem einwertigen Polyetheralkohol mit (im statistischen Mittel) 7 bis 25 Alkylenoxideinheiten, die zumindest zu 70 Mol-% aus Ethylenoxideinheiten bestehen,
unter Einhaltung eines NCO/OH-Äquivalentverhältnisses von 4:1 bis 120:1 unter Urethanbildung umsetzt, wobei im übrigen Art und Mengenverhältnisse der Ausgangskomponenten so gewählt werden, daß die resultierenden Umsetzungsprodukte den unter a) bis d) gemachten Bedingungen entsprechen.

4. Verfahren gemäß Anspruch 3, dadurch gekennzeichnet, daß man als Komponente A) ein Urethangruppen aufweisendes Umsetzungsprodukt mit einem Gehalt an Ethersauerstoffatomen von 2 bis 12 Gew.-% von 2,4- und 2,6-Diisocyanatotoluol mit einer mehrwertigen, zumindest teilweise aus Ethergruppen-aufweisenden Polyolen bestehenden Alkoholkomponente verwendet.

5. Verfahren gemäß Anspruch 3 und 4, dadurch gekennzeichnet, daß man als Komponente B) ein Ethoxylierungsprodukt eines C₁-C₄-Alkanols mit (im statistischen Mittel) 7 bis 25 Ethylenoxideinheiten verwendet.

6. Wäßriges Zweikomponenten-Beschichtungsmittel, dessen Bindemittel im wesentlichen aus einer Kombination aus
I) einer Polyisocyanat-Zubereitung gemäß Anspruch 1 und
II) einer in Wasser löslichen oder dispergierbaren Polyhydroxylkomponente
in einem NCO/OH-Äquivalentverhältnis von 0,6:1 bis 2:1 entsprechenden Mengen besteht.

7. Wäßriges Zweikomponenten-Beschichtungsmittel gemäß Anspruch 6, dadurch gekennzeichnet, daß die Komponente II) aus mindestens einem in Wasser löslichen oder dispergierbaren, Hydroxylgruppen aufweisenden Polyacrylatharz des Molekulargewichts Mn 500 bis 50.000 besteht.

8. Verwendung von Zweikomponenten-Beschichtungsmitteln gemäß Anspruch 6 und 7 zur Herstellung von Beschichtungen auf flächigen, wasserresistenten Substraten.

## Claims

1. Water-dispersible polyisocyanate preparation obtained by partial urethanisation of the isocyanate groups of 2,4- and/or 2,6-diisocyanatotoluene by reaction with monohydric or polyhydric alcohols, characterised by
a) an average NCO functionality of 1.9 to 3.3,
b) a content of isocyanate groups (calculated as NCO, molecular weight 42) of from 8 to 18 wt.%,
c) a content of ethylene oxide units (calculated as C₂H₄O, molecular weight 44) of from 5 to 40 wt.%, which are arranged within terminal polyether chains consisting to the extent of at least 70 mol-% of ethylene oxide units, the polyether chains containing on statistical average 7 to 25 alkylene oxide units, and
d) a content of urethane groups (calculated as CHNO₂, molecular weight 59) of from 13 to 33 wt.%.

2. Water-dispersible polyisocyanate preparation according to claim 1, characterised by
e) polyhydric ether alcohols, incorporated via urethane groups, in such a quantity as corresponds to a content of up to 16 wt.%, referred to the polyisocyanate preparation, of ether oxygen atoms arranged within such polyether alcohols.

3. A process for the preparation of a polyisocyanate preparation according to claim 1, characterised in that
A) a polyisocyanate component having an (average) NCO functionality of 2.7 to 4.1, a content of isocyanate groups of from 12 to 20 wt.% and a content of urethane groups of from 17 to 29 wt.%, consisting of at least one polyisocyanate containing urethane groups, prepared by partial urethanisation of the isocyanate groups of 2,4- and/or 2,6-diisocyanatotoluene,
is reacted with
B) a monohydric hydrophilic polyether component, consisting of at least one monohydric polyether alcohol having (on statistical average) 7 to 25 alkylene oxide units which consist to the extent of at least 70 mol-% of ethylene oxide units,
an NCO/OH equivalent ratio of from 4:1 to 120:1 being maintained, with urethane formation, the type and proportions of the starting components incidentally being so chosen that the resulting reaction products correspond to the conditions stated under a) to d).

4. A process according to claim 3, characterised in that the compound used as component A) is a reaction product of 2,4- and 2,6-diisocyanatotoluene with a polyhydric alcohol component consisting at least partly of polyols containing ether groups, the said reaction product containing urethane groups and having a content of ether oxygen atoms of from 2 to 12 wt.%.

5. A process according to claims 3 and 4, characterised in that an ethoxylation product of a C₁-C₄ alkanol having (on statistical average) 7 to 25 ethylene oxide units is used as component B).

6. Aqueous two-component coating material, the binder whereof consists substantially of a combination of
I) a polyisocyanate preparation according to claim 1 and
II) a polyhydroxyl component soluble or dispersible in water
in quantities corresponding to an NCO/OH equivalent ratio of from 0.6:1 to 2:1.

7. Aqueous two-component coating material according to claim 6, characterised in that component II) consists of at least one hydroxyl-containing acrylic resin which is soluble or dispersible in water and has a molecular weight Mn of from 500 to 50,000.

8. The use of two-component coating materials according to claims 6 and 7 for the production of coatings on flat, water-resistant substrates.

## Revendications

1. Formulation de polyisocyanate apte à être dispersée dans l'eau, que l'on obtient par uréthanisation partielle des groupes isocyanates du 2,4- et/ou 2,6-diisocyanatotoluène par réaction avec des alcools mono- et polyvalents, caractérisée par
a) une fonctionnalité NCO moyenne de 1,9 à 3,3,
b) une teneur en groupes isocyanates (calculée comme NCO, poids moléculaire 42) de 8 à 18% en poids,
c) une teneur en unités d'oxyde d'éthylène (calculée comme C₂H₄O, poids moléculaire 44) de 5 à 40% en poids, qui sont disposées à l'intérieur de chaînes de polyéthers terminales constituées, au moins jusqu'à concurrence de 70 moles % en poids, par des unités d'oxyde d'éthylène, les chaînes de polyéthers présentant, dans la moyenne statistique, de 7 à 25 unités d'oxydes d'alkylènes, et
d) une teneur en groupes uréthane (calculée comme CHNO₂, poids moléculaire 59) de 13 à 33% en poids.

2. Formulation de polyisocyanate apte à être dispersée dans l'eau selon la revendication 1, caractérisée par
e) des éther-alcools polyvalents incorporés via des groupes uréthane, en une quantité telle qu'elle correspond à une teneur de la formulation de polyisocyanate en atomes d'oxygène du groupe éther, disposés à l'intérieur de polyéther-alcools de ce type, jusqu'à concurrence de 16% en poids.

3. Procédé pour la préparation d'une formulation de polyisocyanate selon la revendication 1, caractérisé en ce qu'on fait réagir
A) un composant de polyisocyanate possédant une fonctionnalité NCO (moyenne) de 2,7 à 4,1, une teneur en groupes isocyanates de 12 à 20% en poids et une teneur en groupes uréthane de 17 à 29% en poids, constitué par au moins un polyisocyanate présentant des groupes uréthane, préparé par uréthanisation partielle des groupes isocyanates du 2,4- et/ou 2,6-diisocyanatotoluène, avec
B) un composant de polyéther hydrophile monovalent constitué par au moins un polyéther-alcool monovalent avec (dans la moyenne statistique) de 7 à 25 unités d'oxydes d'alkylènes qui sont constituées, au moins jusqu'à concurrence de 70 moles %, par des unités d'oxyde d'éthylène,
en maintenant un rapport d'équivalents NCO/OH de 4:1 à 120:1 avec formation d'uréthane, dans lequel on sélectionne par ailleurs le type et les proportions des composants de départ de telle sorte que les produits réactionnels obtenus répondent aux conditions mentionnées sous a) à d).

4. Procédé selon la revendication 3, caractérisé en ce qu'on utilise comme composant A) un produit réactionnel présentant des groupes uréthane, possédant une teneur en atomes d'oxygène du groupe éther de 2 à 12% en poids, du 2,4- et 2,6-diisocyanatotoluène avec un composant d'alcool polyvalent constitué au moins en partie par des polyols présentant des groupes éthers.

5. Procédé selon les revendications 3 et 4, caractérisé en ce qu'on utilise comme composant B) un produit d'éthoxylation d'un alcanol en C₁-C₄ avec (dans la moyenne statistique) de 7 à 25 unités d'oxyde d'éthylène.

6. Agent d'enduction aqueux à deux composants dont le liant est constitué essentiellement d'une combinaison
I) d'une formulation de polyisocyanate selon la revendication 1 et
II) d'un composant polyhydroxylé soluble ou apte à être dispersé dans l'eau,
dans des quantités correspondant à un rapport d'équivalents NCO/OH de 0,6:1 à 2:1.

7. Agent d'enduction aqueux à deux composants selon la revendication 6, caractérisé en ce que le composant II) est constitué d'au moins une résine de polyacrylate possédant un poids moléculaire Mn de 500 à 50.000, présentant des groupes hydroxyle et soluble ou apte à être dispersée dans l'eau.

8. Utilisation d'agents d'enduction à deux composants selon les revendications 6 et 7 pour la préparation d'enductions sur des substrats plats résistant à l'eau.
